# EUROPEAN PATENT SPECIFICATION

(11) **EP 2 025 963 B1**
(45) Date of publication and mention of the grant of the patent: **11.11.2015**
(21) Application number: 08252563.5
(22) Date of filing: 28.07.2008
(51) Int. Cl.: F16D 25/08, F16D 67/04

(54) **Transmission mechanism and vehicle provided with the same**
Übertragungsmechanismus und Fahrzeug damit
Mécanisme de transmission et véhicule fourni avec celui-ci

(30) Priority: 06.08.2007 JP 2007204640; 28.11.2007 JP 2007307160
(43) Date of publication of application: 18.02.2009
(73) Proprietor: Yamaha Hatsudoki Kabushiki Kaisha, Iwata-shi, Shizuoka 438-8501 (JP)
(72) Inventor: Takeuchi, Yoshihiko c/o Yamaha Hatsudoki Kabushiki Kaisha, Shizuoka-ken 438-8501 (JP)
(74) Representative: Zimmermann, Tankred Klaus

(56) References cited:
- DE-B- 1 139 384
- FR-A- 946 737
- GB-A- 374 316
- JP-A- 2000 168 378
- US-A- 2 903 108
- US-A- 4 566 577

## Description

### Technical Field

This invention relates to a transmission mechanism and a vehicle provided with the transmission mechanism. In particular, the invention relates to a transmission mechanism including a main shaft and a clutch mechanism part capable of connecting and disconnecting drive force transmitted to the main shaft, and a vehicle provided with the transmission mechanism.

### Background Art

There has been conventionally known a transmission for a vehicle (transmission mechanism) including a main shaft and a clutch mechanism part capable of connecting and disconnecting drive force transmitted to the main shaft (for example, see Japanese Unexamined Patent Publication No. 2000-168378). The conventional transmission for the vehicle disclosed in the above Japanese Unexamined Patent Publication No. 2000-168378 includes a main shaft, a clutch capable of connecting and disconnecting drive force transmitted to the main shaft, a fixing plate rotating along with the main shaft, a base member supporting the main shaft, and a plate spring disposed between the fixing plate and the base member, the plate spring biasing the fixing plate. This plate spring, which is configured to be always biased to the fixing plate, has a function for reducing the rotation number of the main shaft after the drive force is disconnected to the main shaft by the clutch. That is, the transmission for the vehicle (transmission mechanism) according to the above Japanese Unexamined Patent Publication No. 2000-168378 is configured to be able to reduce the rotation number of the main shaft to reduce the inertial force of the main shaft in the rotation direction. This can be suppress the increase in impact received by the transmission for the vehicle even when the shifting operation of a gear is performed immediately after the drive force is disconnected to the main shaft,

However, since the plate spring is always biased to the fixing plate even at the time other than a shifting operation in the conventional transmission for the vehicle (transmission mechanism) described in the above Japanese Unexamined Patent Publication No. 2000-168378 , the rotating loss of the main shaft is always generated. Thereby, there has been a problem in that the rotating loss of the main shaft is increased in the conventional transmission for the vehicle disclosed in the above Japanese Unexamined Patent Publication No. 2000-168378

GB 374 316 A describes a transmission mechanism having a driven shaft, a clutch mechanism for connecting the shaft with and disconnecting it from a source of power, a brake disc fixed to the shaft, a brake disc movable relatively to the fixed disc, and a lever adapted to be operated for moving the rotatable disc into contact with the fixed disc and for effecting release of the clutch.

### Summary

It is an object of the present invention to provide a transmission mechanism capable of suppressing the increase in rotating loss of a main shaft, and a vehicle provided with the transmission mechanism.

This object is achieved by a transmission mechanism according to claim 1, and by a vehicle according to claim 16.

One aspect of the invention provides a transmission mechanism including: a crankshaft; a main shaft to which drive force of the crankshaft is transmitted to be rotated; a clutch mechanism part capable of disconnecting and connecting the drive force transmitted to the main shaft from the crankshaft; and a rod part connected to the clutch mechanism part, the rod part moving in an axial direction to actuate the clutch mechanism part so as to disconnect and connect the drive force transmitted to the main shaft from the crankshaft, wherein the rod part includes a pressing part configured to press on one end face of the main shaft when the clutch mechanism part is actuated so as to disconnect the drive force transmitted to the main shaft from the crankshaft.

In such an embodiment of the transmission mechanism, the pressing part configured to press the main shaft when the clutch mechanism part is actuated so as to disconnect the drive force transmitted to the main shaft from the crankshaft is provided in the rod part. Thereby, since the pressing part usually presses the main shaft only when the clutch mechanism part actuated in performing the shifting operation is actuated, the increase in rotating loss of the main shaft can be suppressed as compared to the case where the pressing part always presses the main shaft. Since the main shaft is pressed after the drive force transmitted to the main shaft from the crankshaft is disconnected, the wear of a portion of the pressing partpressing the main shaft can be suppressed as compared to the case where the pressing part always presses the main shaft. As a result, the declination of a function for reducing the rotation number of the main shaft can be suppressed after the drive force is disconnected to the main shaft.

Another aspect of the invention provides a vehicle with the transmission mechanism described above. Thus, there can be easily obtained a vehicle capable of suppressing the declination of the function for reducing the rotation number of the main shaft after the drive force is disconnected to the main shaft.

### Brief Description of the Drawings

Embodiments of the invention are described, by way of example only, with reference to the drawings.
Figure 1 is a side view showing an overall structure of a motorcycle on which a transmission according to a first embodiment of the present invention is mounted.
Figure 2 is a sectional view for describing the structure of an engine of the motorcycle on which the transmission according to the first embodiment shown in Figure 1 is mounted.
Figure 3 is a sectional view for describing the structure of the transmission of the motorcycle on which the transmission according to the first embodiment shown in Figure 1 is mounted.
Figure 4 is a diagram for describing the structure of a pushrod of the motorcycle on which the transmission according to the first embodiment shown in Figure 1 is mounted.
Figure 5 is a diagram viewed from the direction of an arrow P of Figure 4.
Figure 6 is a sectional view for describing the structure of the pushrod and structure in the vicinity of the pushrod of the motorcycle on which the transmission according to the first embodiment shown in Figure 1 is mounted.
Figure 7 is a sectional view for describing the structure of the transmission of the motorcycle on which the transmission according to the first embodiment shown in Figure 1 is mounted.
Figure 8 is a diagram for describing the operation of a flange part of the pushrod pressing one end face of a main shaft when the motorcycle on which the transmission according to the first embodiment shown in Figure 1 is mounted is started from a stopped condition.
Figure 9 is a sectional view for describing the structure of a pushrod of a transmission and structure in the vicinity of the pushrod according to a second embodiment of the present invention.
Figure 10 is a diagram for describing the structure of the pushrod of the transmission according to the second embodiment of the present invention.
Figure 11 is a diagram viewed from the direction of an arrow Q of Figure 9.
Figure 12 is a diagram for describing the structure of a rod holder of the transmission according to the second embodiment of the present invention.
Figure 13 is a diagram for describing a structure in the vicinity of a portion to which the rod holder of a crank case of the transmission according to the second embodiment of the present invention is attached.

### Detailed Description

Hereinafter, embodiments of the present invention will be described with reference to the drawings.

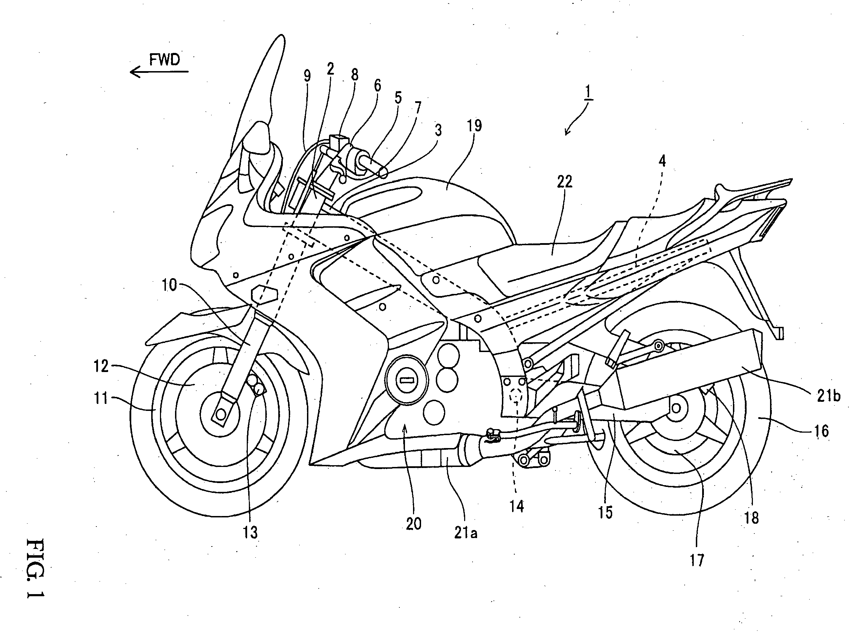

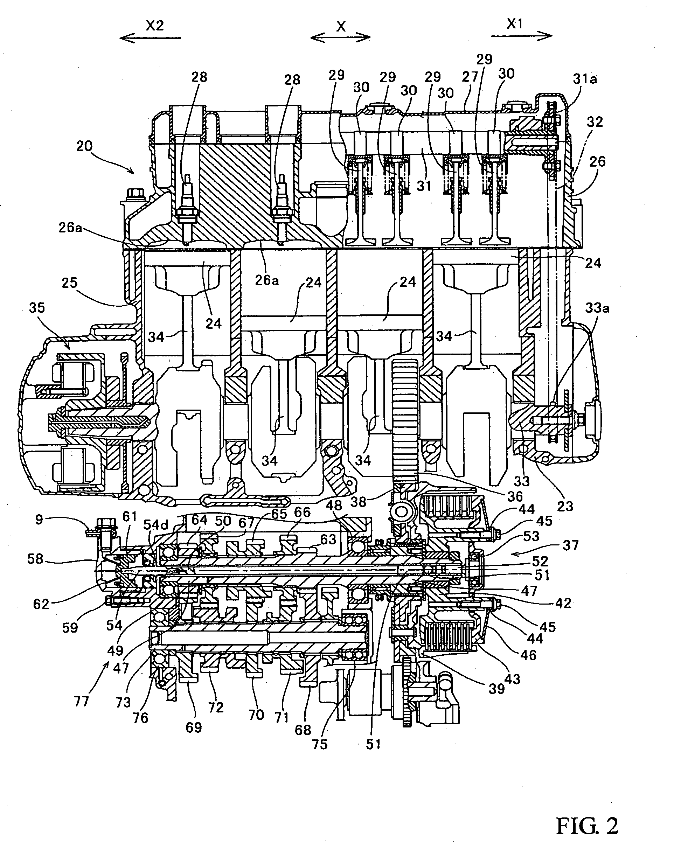

Figure 1 is a side view showing the overall structure of a motorcycle (vehicle) on which a transmission mechanism according to a first embodiment of the present invention is mounted. Figures 2 to 7 are diagrams for describing the transmission of the motorcycle according to the first embodiment shown in Figure 1 and the inner structure of the transmission in detail. The first embodiment describes a motorcycle as one example of the vehicle of the present invention. In the drawings, FWD represents the front of the traveling direction of the motorcycle. First, with reference to Figs. 1 to 7, the structure of a motorcycle 1 according to the first embodiment will be described.

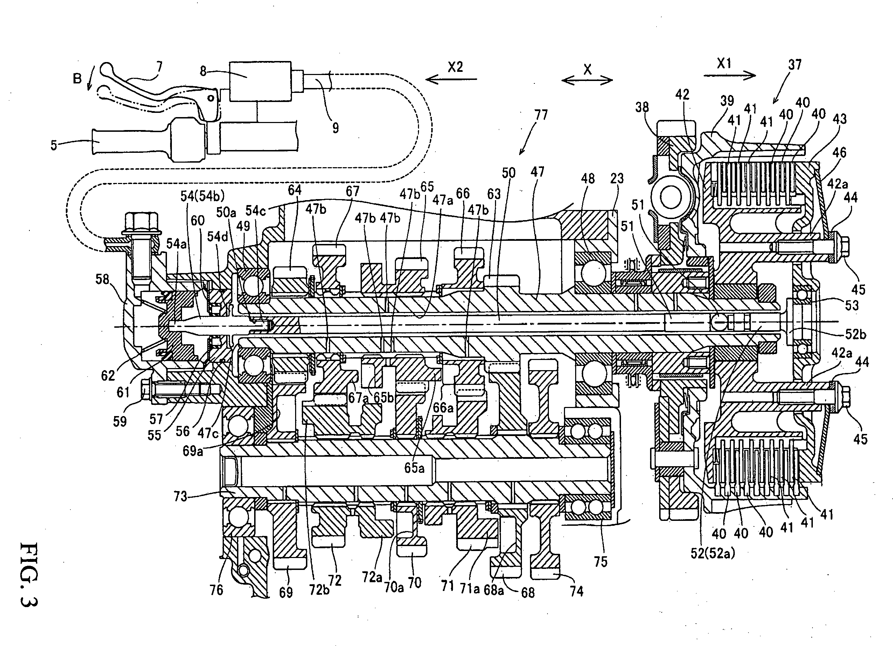

As shown in Figure 1, as the structure of the motorcycle 1 according to the first embodiment of the present invention, the front end of a main frame 3 is connected to a head pipe 2. This main frame 3 is formed so as to extend downward and rearward. A seat rail 4 extending upward and rearward is connected to the main frame 3. A handlebar 5 is attached to the upper part of the head pipe 2. A holder 6 is attached to the handlebar 5. A clutch lever 7 is rotatably attached to the holder 6. The clutch lever 7 is disposed on an arrow X2 direction side (see Figure 2) of the handlebar 5, and one side of an oil hose 9 (see Figure 3) is connected to the clutch lever 7 via a master cylinder 8. That is, the clutch lever 7 is configured so that a driver grips and rotates the clutch lever 7 and thereby the master cylinder 8 is actuated and oil with which the oil hose 9 is filled moves to the other side of the oil hose 9.

A front fork 10 is attached to the lower part of the handlebar 5. A front wheel 11 is rotatably attached to the lower end of the front fork 10. A front disc rotor 12 is attached to the front wheel 11 so as to rotate along with the front wheel 11. A front caliper 13 is attached to the front fork 10 so as to sandwich the front disc rotor 12.

The front end of a swing arm 15 is attached to the rear end of the main frame 3 via a pivot shaft 14. A rear wheel 16 is rotatably attached to the rear end of the swing arm 15. A rear disc rotor 17 is attached to the rear wheel 16 so as to rotate along with the rear wheel 16. A rear caliper 18 is attached to the swing arm 15 so as to sandwich the rear disc rotor 17. A fuel tank 19 is disposed on the upper side of the main frame 3. An engine 20 is mounted on the lower side of the main frame 3. A muffler 21b is connected to the engine 20 via a chamber 21a. A seat 22 is disposed on the upper side of the seat rail 4.

As shown in Figure 2, the engine 20 includes a crank case part 23, cylinder parts 25 in which pistons 24 are disposed, a cylinder head part 26 disposed on the upper side of the cylinder part 25, and a cylinder head cover part 27. Four cylinder parts 25 and four pistons 24 of the engine 20 are respectively provided along the vehicle width direction (X direction of Figure 2) of the motorcycle 1. That is, the engine 20 is a four cylinder engine. A combustion chamber 26a is provided in the lower part of the cylinder head part 26, and a spark plug 28 is disposed in the upper part of the combustion chamber 26a. An air intake valve 29 and an air exhaust valve (not shown) are disposed in the upper part of the combustion chamber 26a. The air intake valve 29 and the air exhaust valve (not shown) are respectively configured to be openable and closable to the combustion chamber 26a by the rotation of cams 30 and a cam which is not shown, the cams provided above the air intake valve 29 and the air exhaust valve (not shown). The cams 30 and the cam which is not shown are respectively provided on a cam shaft 31 and a cam shaft which is not shown. A sprocket 31a is provided on one side of the cam shaft 31, and a chain 32 is meshed with the sprocket 31a. The chain 32 is meshed with a sprocket 33a provided on one side of the crankshaft 33.

The crankshaft 33 is disposed in the crank case part 23, and the piston 24 is connected to the crankshaft 33 via a con rod 34. That is, the crankshaft 33 is configured to rotate in a prescribed direction by the repeated sliding of the piston 24 on the inner peripheral surface of the cylinder part 25. A generator 35 is provided on the other side of the crankshaft 33. An upstream side primary reduction gear 36 is attached to a portion nearer to one side (an arrow X1 direction side) relative to the center of the crankshaft 33 so as to rotate along with the crankshaft 33.

As shown in Figure 3, a downstream side primary reduction gear 38 of a clutch mechanism part 37 is meshed with the upstream side primary reduction gear 36. A housing clutch 39 is riveted to the downstream side primary reduction gear 38, and the housing clutch 39 is configured to rotate along with the downstream side primary reduction gear 38. A plurality of friction plates 40 are disposed in the housing clutch 39 so as to rotate along with the housing clutch 39. A plurality of clutch plates 41 are respectively disposed between the plurality of friction plates 40. The plurality of clutch plates 41 are disposed in the housing clutch 39 so as to rotate along with a boss clutch 42 disposed in the housing clutch 39. A pressure plate 43 is disposed on the outer side (the arrow X1 direction side) of the housing clutch 39 in the vehicle width direction. This pressure plate 43 is provided in order to press the plurality of friction plates 40 and the plurality of clutch plates 41 to the center direction (the arrow X2 direction side) in the vehicle width direction. That is, the pressure plate 43 has a function for pushing the plurality of friction plates 40 and the plurality of clutch plates 41 which are alternately disposed against each other to generate frictional force between the plurality of friction plates 40 and the plurality of clutch plates 41.

A protrusion 42a outwardly projecting in the vehicle width direction is integrally formed with the boss clutch 42. A washer 44 and a bolt 45 are screwed with the protrusion 42a, and the diameter of the outer peripheral portion of the washer 44 is configured to be larger than that of the outer peripheral portion of a portion to which the washer 44 of the protrusion 42a is attached. A plate spring 46 is disposed between a surface of the washer 44 located on the center side (the arrow X2 direction side) in the vehicle width direction and a surface of the pressure plate 43 located on the outer side (the arrow X1 direction side) in the vehicle width direction. This plate spring 46 is configured to be supported by the washer 44, thereby biasing the pressure plate 43 to the center side (the arrow X2 direction side) in the vehicle width direction. The clutch mechanism part 37 mainly includes the downstream side primary reduction gear 38, the housing clutch 39, the friction plate 40, the clutch plate 41, the boss clutch 42 and the pressure plate 43 or the like. That is, the clutch mechanism part 37 according to the first embodiment is a wet multiple disc clutch.

One side of a main shaft 47 is attached to the boss clutch 42. The main shaft 47 is rotatably supported by bearings 48 and 49 attached to the crank case part 23. The main shaft 47 and the boss clutch 42 are configured to integrally rotate. Thereby, when the pressure plate 43 presses the plurality of friction plates 40 and the plurality of clutch plates 41 to the center direction (the arrow X2 direction side) in the vehicle width direction, the drive force of the upstream side primary reduction gear 36 is transmitted to the main shaft 47 via the downstream side primary reduction gear 38, the housing clutch 39, the friction plate 40, the clutch plate 41 and the boss clutch 42. On the other hand, since the friction force of the friction plate 40 and clutch plate 41 is reduced when the pressure plate 43 does not press the plurality of friction plate 40 and the plurality of clutch plates 41 to the center direction (the arrow X2 direction side) in the vehicle width direction, the drive force of the upstream side primary reduction gear 36 is difficult to be transmitted to the main shaft 47.

A through-hole 47a is formed along an axial direction of an axial center in the main shaft 47. The through-hole 47a is one example of a "hole part" for an embodiment of the present invention. A plurality of oil holes 47b are formed in the main shaft 47 so as to pass from the through-hole 47a to the outer peripheral surface of the main shaft 47. Thereby, oil flowing into the through-hole 47a from the other side of the main shaft 47 can be supplied to a transmission 77 or the like to be described later via the plurality of oil holes 47b. A rod member 50 made of aluminum is inserted into the through-hole 47a of the main shaft 47 with the rod member 50 separated from the inner peripheral surface of the through-hole 47a at a prescribed interval. The rod member 50 is one example of a "rod part" and "second rod part" for an embodiment of the present invention. A plurality of intermediate members 51 and a pressing member 52 are disposed on the pressure plate 43 side (the arrow X1 direction side) of the rod member 50. This pressing member 52 is configured to be able to outwardly move in the vehicle width direction (the arrow X1 direction side). Thereby, when the pressing member 52 is outwardly moved in the vehicle width direction (the arrow X1 direction side), the pressing member 52 is configured to resist the biasing force of the plate spring 46 to outwardly move the pressure plate 43 in the vehicle width direction (the arrow X1 direction side). Specifically, the pressing member 52 includes a shaft inserting part 52a and a bearing support part 52b. The shaft inserting part 52a is inserted into the through-hole 47a so as to close one side of the through-hole 47a of the main shaft 47. The bearing support part 52b is rotatably supported by a bearing 53 inserted into the pressure plate 43. The pressing member 52 is outwardly pressed in the vehicle width direction (the arrow X1 direction side) by the rod member 50 via the intermediate members 51, and thereby the pressure plate 43 is outwardly moved in the vehicle width direction (the arrow X1 direction side).

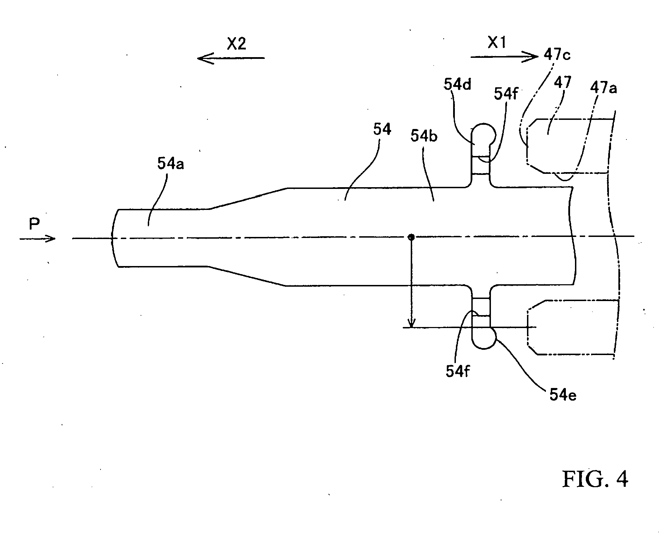

Herein, in the first embodiment, an iron pushrod 54 having hardness higher than that of the rod member 50 made of aluminum is attached to the rod member 50 on the opposite side (the arrow X2 direction side) to the pressure plate 43 side. The pushrod 54 is one example of a "rod part" and "first rod part" for an embodiment of the present invention. The "rod part" for an embodiment of the present invention is constituted by the rod member 50 and the pushrod 54. As shown in Figs. 3 and 4, the pushrod 54 includes a piston inserting part 54a inserted into a piston 61 (see Figure 3) to be described later, a body part 54b extending in the vehicle width direction (the arrow X1 direction and the arrow X2 direction), a fitting convex part 54c (see Figure 3) fitted into a pushrod inserting hole 50a (see Figure 3) of the rod member 50, and a flange part 54d integrally formed with the body part 54b and projecting to a direction crossing in the axial direction from the body part 54b. The flange part 54d is one example of the "pressing part" for an embodiment of the present invention. As shown in Figure 3, the pushrod 54 is configured to be able to move to the pressure plate 43 side (the arrow X1 direction side) by the piston 61 to be described later, and the pushrod 54 is configured to be able to press one end face 47c of the main shaft 47. The pushrod 54 has a function for moving the rod member 50 to the pressure plate 43 side (the arrow X1 direction side) and outwardly moving the pressure plate 43 in the vehicle width direction (the arrow X1 direction side) via the intermediate members 51 and the pressing member 52.

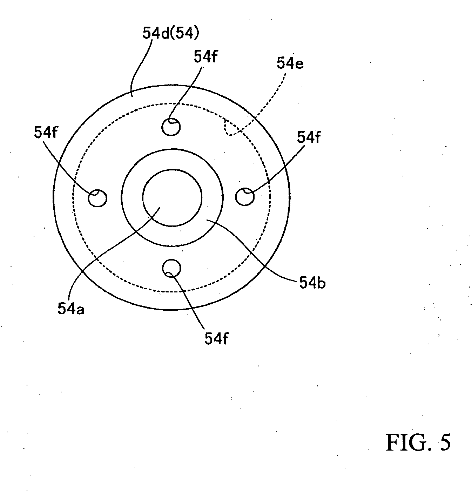

In the first embodiment, as shown in Figure 4, a convex part 54e projecting to one end face 47c side (the arrow X1 direction side) of the main shaft 47 and having a section of a semi-circular shape is provided on a portion of the flange part 54d of the pushrod 54 pressing the main shaft 47. Specifically, the convex part 54e is configured to be formed along the outer circumference of the flange part 54d, and is configured to press the end face 47c of the main shaft 47 with the convex part 54e annularly brought into line-contact with the end face 47c. As shown in Figs. 4 and 5, a plurality of oil inflow hole parts 54f are formed in the surface of the flange part 54d. The plurality of oil inflow hole parts 54f are configured to allow oil to flow in the through-hole 47a (see Figure 4) even in a condition where the through-hole 47a (see Figure 4) of the main shaft 47 is closed because the flange part 54d presses the end face 47c of the main shaft 47 (see Figure 4).

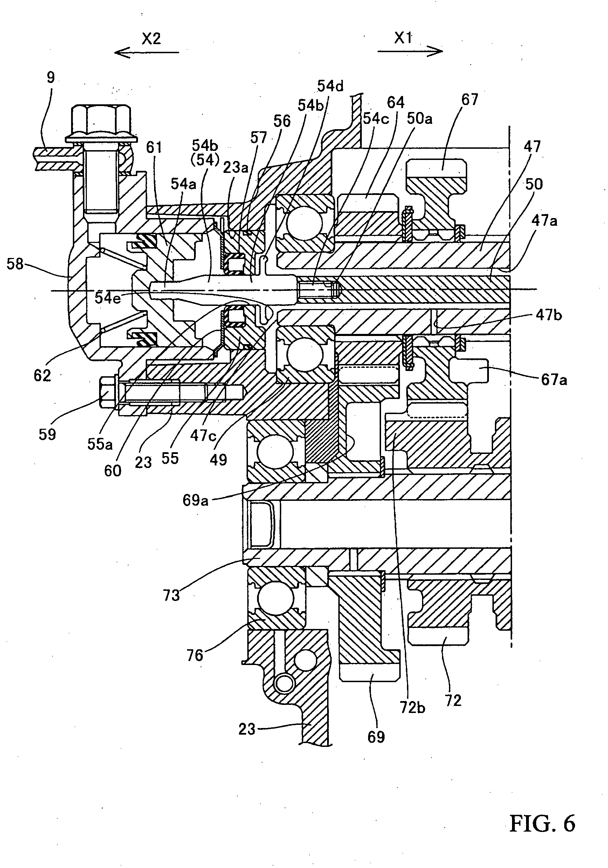

As shown in Figure 6, the body part 54b of the pushrod 54 is inserted into an opening part 55a of the rod holder 55. This rod holder 55 is inserted into a holder attaching hole 23a of the crank case part 23. An O ring 56 is disposed between the outer peripheral surface of the rod holder 55 and the holder attaching hole 23a. This O ring 56 has a function for suppressing inflow of oil on the arrow X1 direction side relative to the holder attaching hole 23a of the crank case part 23 into the arrow X2 direction side relative to the rod holder 55 through the clearance between the outer peripheral surface of the rod holder 55 and the holder attaching hole 23a. An oil seal 57 is disposed on the opening part 55a of the rod holder 55 on the arrow X2 direction side. This oil seal 57 has a function for suppressing outflow of oil on the arrow X1 direction side relative to the rod holder 55 from the clearance between the outer peripheral surface of the body part 54b of the pushrod 54 and the opening part 55a of the rod holder 55 and inflow of the oil into the arrow X2 direction side relative to the rod holder 55.

A cylinder member 58 is provided on the arrow X2 direction side of the rod holder 55. This cylinder member 58 is attached so as to cover a portion of the crank case part 23 on the arrow X2 direction side, in which the main shaft 47 is disposed. That is, the cylinder member 58 is disposed on the opposite direction side (the arrow X2 direction side) to the rod member 50 side of the pushrod 54. This cylinder member 58 is firmly attached to the crank case part 23 by a screw member 59. A plate spring 60 is disposed on the arrow X1 direction end of the cylinder member 58. This plate spring 60 supports a portion on the arrow X2 direction side of the rod holder 55. Thereby, even when the rod holder 55 is pressed to the arrow X2 direction side by the oil in the crank case part 23, the dropout of the rod holder 55 can be suppressed in the arrow X2 direction.

The piston 61 is slidably disposed on the inner peripheral surface of the cylinder member 58 in the cylinder member 58. The piston inserting part 54a of the pushrod 54 is attached to the piston 61. A return spring 62 is disposed on the opposite direction side (the arrow X2 direction side) to the pushrod 54 side of the piston 61, and the return spring 62 always biases the piston 61 to the pushrod 54 side.

As shown in Figure 3, the other side of the oil hose 9 is connected to the cylinder member 58 on the side where the return spring 62 is disposed (the arrow X2 direction side). That is, the side (the arrow X2 direction side) of the cylinder member 58 on which not the piston 61 but the return spring 62 is disposed is filled with oil flowable through the master cylinder 8. Thereby, when the clutch lever 7 is gripped by the driver, the oil in the master cylinder 8 is flowed into the cylinder member 58 via the oil hose 9 from the master cylinder 8, and the piston 61 is moved to the pushrod 54 side (the arrow X1 direction side). As a result, since the pushrod 54 is moved to the pressure plate 43 side (the arrow X1 direction side), the pressure plate 43 is outwardly moved in the vehicle width direction (the arrow X1 direction side) via the rod member 50, the intermediate members 51 and the pressing member 52.

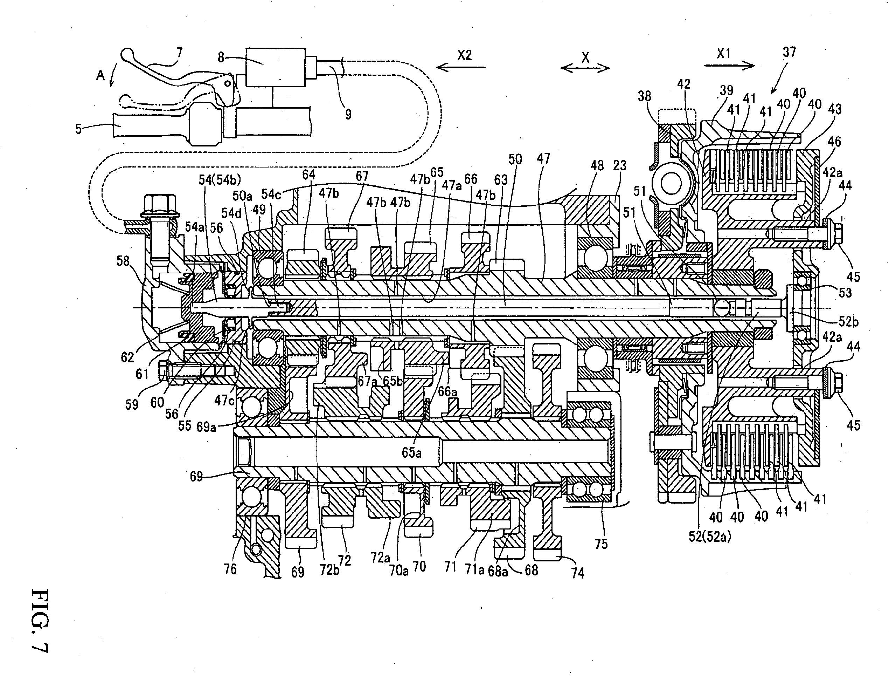

In the first embodiment, as shown in Figure 7, when the clutch lever 7 is substantially gripped in a first gripping amount A which is in a full stroke condition by the driver, the flange part 54d is configured to press the end face 47c of the main shaft 47. As shown in Figure 3, when the clutch lever 7 is gripped in a second gripping amount B which is in a stroke condition less than the first gripping amount A by the driver, the flange part 54d is configured so as not to press the end face 47c of the main shaft 47. That is, even when the driver grips the clutch lever 7 to actuate the clutch mechanism part 37 so as to disconnect the drive force transmitted to the main shaft 47 from the crankshaft 33, the driver can grip the clutch lever 7 in either the first gripping amount A or the second gripping amount B. Thereby, when the driver requires the reduction in rotation number of the main shaft 47 rotated by the inertial force, the driver grips the clutch lever 7 to the first gripping amount A. When the driver does not require the reduction in rotation number of the main shaft 47 rotated by the inertial force, the driver grips the clutch lever 7 in the second gripping amount B.

Herein, generally, the driver frequently grips the clutch lever 7 to the first gripping amount A deeply in the stopping. The driver frequently grips the clutch lever 7 in the second gripping amount B less than the first gripping amount A in the traveling. That is, the motorcycle 1 according to the first embodiment is configured to suppress the rotation of the main shaft 47 caused by the inertial force of the main shaft 47 when the driver deeply grips the clutch lever 7 in the first gripping amount A in the stopping. The motorcycle 1 according to the first embodiment is configured to maintain the rotation condition of the main shaft 47 caused by the inertial force of the main shaft 47 when the driver grips the clutch lever 7 in the second gripping amount B in the traveling.

An upstream side first gear 63, an upstream side second gear 64, an upstream side third gear 65, an upstream side fourth gear 66, and an upstream side fifth gear 67 are provided on the main shaft 47. Specifically, the upstream side first gear 63, which is integrally formed with the main shaft 47 on the clutch mechanism part 37 side (the arrow X1 direction side), is formed to be able to rotate along with the main shaft 47. The upstream side first gear 63 is one example of a "first gear" for an embodiment of the present invention. The upstream side fourth gear 66 is disposed to be able to idle to the main shaft 47 next to the upstream side first gear 63 on the opposite direction side (the arrow X2 direction side) to the clutch mechanism part 37 side. A plurality of concave parts 66a are formed on the upstream side fourth gear 66 on the opposite direction side (the arrow X2 direction side) to the clutch mechanism part 37 side. The upstream side third gear 65 is movably disposed along the axial direction (the arrow X1 direction and the arrow X2 direction) of the main shaft 47 next to the upstream side fourth gear 66 on the opposite direction side (the arrow X2 direction side) to the clutch mechanism part 37 side. A plurality of convex parts 65a are formed on the clutch mechanism part 37 side (the arrow X1 direction side) of the upstream side third gear 65. The plurality of convex parts 65a are configured to be able to be engaged with the plurality of concave parts 66a of the upstream side fourth gear 66. When the upstream side third gear 65 slides and moves to the clutch mechanism part 3 7 side (the arrow X1 direction side), the convex parts 65a and the concave parts 66a are engaged with one another. In this case, the idling of the upstream side fourth gear 66 is suppressed by the upstream side third gear 65.

A plurality of concave parts 65b are formed on the upstream side third gear 65 on the opposite direction side (the arrow X2 direction side) to the clutch mechanism part 37 side. The upstream side fifth gear 67 is disposed to be able to idle to the main shaft 47 next to the upstream side third gear 65 on the opposite direction side (the arrow X2 direction side) to the clutch mechanism part 37 side. A plurality of convex parts 67a are formed on the clutch mechanism part 37 side (the arrow X1 direction side) of the upstream side fifth gear 67. The plurality of convex parts 67a are configured to be able to be engaged with the plurality of concave parts 65b of the upstream side third gear 65. When the upstream side third gear 65 slides and moves to the opposite direction side (the arrow X2 direction side) to the clutch mechanism part 37 side, the convex parts 67a and the concave parts 65b are engaged with one another. In this case, the idling of the upstream side fifth gear 67 is suppressed by the upstream side third gear 65.

The upstream side second gear 64 is provided on the main shaft 47 on the opposite direction side (the arrow X2 direction side) to the clutch mechanism part 37 side. This upstream side second gear 64, which is different from the upstream side third gear 65, the upstream side fourth gear 66 and the upstream side fifth gear 67, is fixed to the main shaft 47.

A downstream side first gear 68, a downstream side second gear 69, a downstream side third gear 70, a downstream side fourth gear 71 and a downstream side fifth gear 72 are respectively meshed with the upstream side first gear 63, the upstream side second gear 64, the upstream side third gear 65, the upstream side fourth gear 66 and the upstream side fifth gear 67. The downstream side first gear 68, the downstream side second gear 69, the downstream side third gear 70, the downstream side fourth gear 71 and the downstream side fifth gear 72 are respectively provided on a drive shaft 73. An intermediate gear 74 for transmitting the drive force of the drive shaft 73 to the rear wheel 16 (see Figure 1) is fixed to the drive shaft 73 on the clutch mechanism part 37 side (the arrow X1 direction side). The drive force transmitted to the intermediate gear 74 is transmitted to the rear wheel 16 via a gear mechanism which is not shown. The drive shaft 73 is rotatably supported by bearings 75 and 76 disposed on the crank case part 23.

The downstream side first gear 68 is provided on the drive shaft 73 on the opposite direction side (the arrow X2 direction side) to the clutch mechanism part 37 side of the intermediate gear 74. The downstream side first gear 68 is one example of a "second gear" for an embodiment of the present invention. This downstream side first gear 68 is disposed to be able to idle to the drive shaft 73, and a plurality of concave parts 68a are formed on the downstream side first gear 68 on the opposite direction side (the arrow X2 direction side) to the clutch mechanism part 37 side. The downstream side fourth gear 71 is movably disposed in the axial direction (the arrow X1 direction and the arrow X2 direction) of the drive shaft 73 next to the downstream side first gear 68 on the opposite direction side (the arrow X2 direction side) to the clutch mechanism part 37 side. A plurality of convex parts 71a are formed on this downstream side fourth gear 71 on the clutch mechanism part 37 side (the arrow X1 direction side). The plurality of convex parts 71a are configured to be able to be engaged with the plurality of concave parts 68a of the downstream side first gear 68. When the downstream side fourth gear 71 slides and moves to the clutch mechanism part 37 side (the arrow X1 direction side), the convex parts 71a and the concave parts 68a are engaged with one another. In this case, the idling of the downstream side first gear 68 is suppressed by the downstream side fourth gear 71.

The downstream side third gear 70 is disposed to be able to idle to the drive shaft 73 next to the downstream side fourth gear 71 on the opposite direction side (the arrow X2 direction side) to the clutch mechanism part 37 side. A plurality of concave parts 70a are formed on the downstream side third gear 70 on the opposite direction side (the arrow X2 direction side) to the clutch mechanism part 37 side. The downstream side fifth gear 72 is movably disposed in the axial direction (the arrow X1 direction and the arrow X2 direction) of the drive shaft 73 next to the downstream side third gear 70 on the opposite direction side (the arrow X2 direction side) to the clutch mechanism part 37 side. A plurality of convex parts 72a are formed on the downstream side fifth gear 72 on the clutch mechanism part 37 side (the arrow X1 direction side), and a plurality of convex parts 72b are formed on the other direction side (the arrow X2 direction side) of the downstream side fifth gear 72, which is opposite to the clutch mechanism part 37 side. The plurality of convex parts 72a are configured to be able to be engaged with the plurality of concave parts 70a of the downstream side third gear 70. When the downstream side fifth gear 72 slides and moves to the clutch mechanism part 37 side, the convex parts 72a and the concave parts 70a are engaged with one another. In this case, the idling of the downstream side third gear 70 is suppressed by the downstream side fifth gear 72.

The downstream side second gear 69 is disposed to be able to idle to the drive shaft 73 next to the downstream side fifth gear 72 on the opposite direction side (the arrow X2 direction side) to the clutch mechanism part 37 side. A plurality of concave parts 69a are formed on this downstream side second gear 69 on the clutch mechanism part 37 side (the arrow X1 direction side). The plurality of concave parts 69a are configured to be able to be engaged with the plurality of convex parts 72b of the downstream side fifth gear 72. When the downstream side fifth gear 72 slides and moves to the opposite direction side (the arrow X2 direction side) to the clutch mechanism part 37 side, the concave parts 69a and the convex parts 72b are engaged with one another. In this case, the idling of the downstream side second gear 69 is suppressed by the downstream side fifth gear 72. The transmission 77 includes the clutch mechanism part 37, the main shaft 47, the upstream side first gear 63, the upstream side second gear 64, the upstream side third gear 65, the upstream side fourth gear 66, the upstream side fifth gear 67, the downstream side first gear 68, the downstream side second gear 69, the downstream side third gear 70, the downstream side fourth gear 71, the downstream side fifth gear 72 and the drive shaft 73. The transmission 77 is one example of a "transmission mechanism" for an embodiment of the present invention.

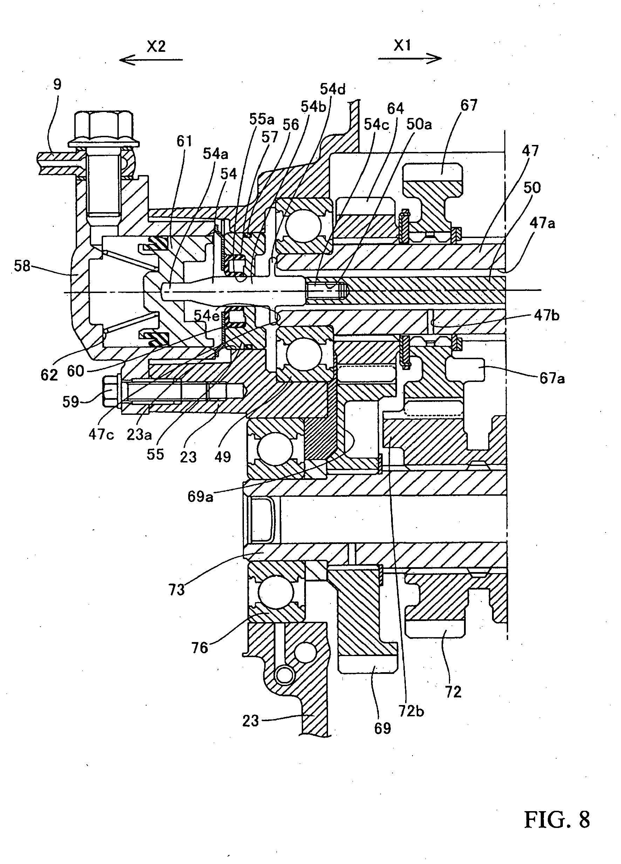

Figure 8 is a diagram for describing the operation of the flange part of the pushrod pressing one end face of the main shaft when the motorcycle according to the first embodiment is started from a stopped condition. Next, with reference to Figs. 3, 7 and 8, the operation of the flange part of the pushrod pressing the end face of the main shaft when the motorcycle according to the first embodiment is started from the stopped condition will be described.

First, the clutch mechanism part 37 is actuated so as to disconnect the drive force transmitted to the main shaft 47 from the crankshaft 33 from a condition where the clutch mechanism part 37 is connected in a neutral condition shown in Figure 3. Specifically, the clutch lever 7 is rotated to the first gripping amount A by the driver to flow the oil in the master cylinder 8 into the cylinder member 58 via the oil hose 9. Thereby, as shown in Figure 8, the piston 61 is moved to the clutch mechanism part 37 side (the arrow X1 direction side) by the pressure of the oil flowed into the cylinder member 58. The pushrod 54 is moved to the clutch mechanism part 37 side (the arrow X1 direction side) in association with movement of the piston 61 to the clutch mechanism part 37 side (the arrow X1 direction side). Thereby, since the pressure plate 43 of the clutch mechanism part 37 is moved to the arrow X1 direction side via the rod member 50, the intermediate members 51 and the pressing member 52, loads between the plurality of friction plates 40 and plurality of clutch plates 41 pushed with one another are reduced. As a result, the drive force transmitted to the main shaft 47 from the crankshaft 33 is disconnected.

Herein, although the drive force transmitted to the main shaft 47 from the crankshaft 33 is disconnected immediately after the drive force transmitted to the main shaft 47 from the crankshaft 33 is disconnected, the main shaft 47 continues to be rotated by the inertial force. On the other hand, the downstream side fourth gear 71 meshed with the upstream side fourth gear 66 idling to the main shaft 47 does not substantially rotate. At this time, the upstream side first gear 63 provided on the main shaft 47 so as to rotate along with the main shaft 47 continues to rotate along with the main shaft 47. Since the downstream side first gear 68 meshed with the upstream side first gear 63 and provided to be able to idle to the drive shaft 73 is in a neutral condition, the downstream side first gear 68 idles to the drive shaft 73.

In this case, the clutch lever 7 is rotated to the first gripping amount A by the driver, and thereby the flange part 54d of the pushrod 54 is pressed to the end face 47c of the main shaft 47. Since the drive force transmitted to the main shaft 47 from the crankshaft 33 is disconnected at this time, the rotation number of the main shaft 47 is reduced as compared to the case where the flange part 54d is not pressed to the end face 47c of the main shaft 47. Thereby, since the rotation number of the downstream side first gear 68 is also reduced, the rotation number of the downstream side first gear 68 is closer to the rotation number of the downstream side fourth gear 71 which does not substantially rotate.

The driver operates a shift lever which is not shown, and thereby the downstream side fourth gear 71 is moved in the arrow X1 direction. The convex parts 71a of the downstream side fourth gear 71 are engaged with the concave parts 68a of the downstream side first gear 68. Since the rotation number of the downstream side first gear 68 is closer to that of the downstream side fourth gear 71 which does not substantially rotate in this case, the convex parts 71a of the downstream side fourth gear 71 and the concave parts 68a of the downstream side first gear 68 are smoothly engaged with one another. Thereby, the downstream side first gear 68 idling to the drive shaft 73 is rotated along with the downstream side fourth gear 71 rotating along with the drive shaft 73. That is, the downstream side first gear 68 is rotatably connected with the drive shaft 73, and the drive force of the main shaft 47 is transmitted to the drive shaft 73.

Then, the driver shallowly grips the clutch lever 7, and thereby the pressure plate 43 biased to the arrow X2 direction by the plate spring 46 is moved to the arrow X2 direction. Thereby, since the drive force of the crankshaft 33 is transmitted to the main shaft 47, the stopped motorcycle 1 can be smoothly started.

In the first embodiment, as described above, there is provided the flange part 54d on the pushrod 54, the flange part 54d configured to press the main shaft 47 when the clutch mechanism part 37 is actuated so as to disconnect the drive force transmitted to the main shaft 47 from the crankshaft 33. Thereby, since the flange part 54d usually presses the main shaft 47 only when the clutch mechanism part 37 actuated in performing the shift operation is actuated, the increase in rotating loss of the main shaft 47 can be suppressed as compared to the case where the flange part 54d always presses the main shaft 47. Since the main shaft 47 is pressed after the drive force transmitted to the main shaft 47 from the crankshaft 33 is disconnected, the wear of a portion (convex part 54e) of the flange part 54d pressing the main shaft 47 can be suppressed as compared to the case where the flange part 54d always presses the main shaft 47. As a result, after the drive force is disconnected to the main shaft 47, the declination of the function for reducing the rotation number of the main shaft 47 can be suppressed.

In the first embodiment, as described above, when the clutch lever 7 is gripped in the first gripping amount A which is in the full stroke condition, the flange part 54d is configured to press the main shaft 47. Thereby, the rotation of the main shaft 47 caused by the inertial force of the main shaft 47 can be usually suppressed by pressing the flange part 54d to the main shaft 47 when the driver deeply grips the clutch lever 7 to the first gripping amount A in the stopping.

In the first embodiment, as described above, when the clutch lever 7 is gripped in the second gripping amount B less than the first gripping amount A, the flange part 54d is configured so as not to press the main shaft 47. Thereby, the pressing of the main shaft 47 by the flange part 54d can be usually suppressed when the driver shallowly grips the clutch lever 7 to the second gripping amount B in the traveling. As a result, the reduction in the rotation number of the main shaft 47 can be suppressed in the traveling. Since the flange part 54d does not press the main shaft 47 in the traveling, the increase in rotating loss of the main shaft 47 can be suppressed.

While the main shaft 47 rotates in stopping the motorcycle 1 as described above in the first embodiment, the downstream side first gear 68 idles to the drive shaft 73, and thereby the flange part 54d of the pushrod 54 is configured to press the main shaft 47 by gripping the clutch lever 7 in the first gripping amount A when the gear is changed to the first from the neutral condition where the drive shaft 73 does not rotate. The rotation number of the downstream side first gear 68 is reduced by reducing the rotation number of the main shaft 47. Thereby, when the convex parts 71a of the downstream side fourth gear 71 which does not rotate along with the drive shaft 73 in the stopping are engaged with the concave parts 68a of the downstream side first gear 68, the rotation number of the downstream side first gear 68 can be reduced. As a result, the convex parts 71a and the concave parts 68a can be smoothly engaged with one another without the convex parts 71a being flipped by the concave parts 68a rotating along with the downstream side first gear 68. Thereby, the operation for changing the gear to the first from the neutral in the stopping can be smoothly carried out.

In the first embodiment, as described above, the convex part 54e projecting to the end face 47c side of the main shaft 47 and having the section of the semi-circular shape is formed on the portion of the flange part 54d pressing the main shaft 47. Thereby, since the convex part 54e can be pressed to the end face 47c of the main shaft 47, the flange part 54d can be pressed to the end face 47c of the main shaft 47 in a stable condition.

In the first embodiment, as described above, the oil inflow hole parts 54f is formed, which allows oil to flow in the through-hole 47a of the main shaft 47 even when one side of the through-hole 47a of the main shaft 47 is covered with the flange part 54d by pressing the flange part 54d of the pushrod 54 to the end face 47c of the main shaft 47. Thereby, the oil can be easily circulated in the through-hole 47a of the main shaft 47.

In the first embodiment, as described above, the pushrod 54 is made of iron having hardness higher than that of the rod member 50 made of aluminum. This can suppress the wear of the flange part 54d provided on the pushrod 54 coming into contact with the end face 47c of the main shaft 47.

In the first embodiment, as described above, the flange part 54d is configured to press the end face 47c of the main shaft 47 in association with movement of the pushrod 54 to the clutch mechanism part 37 side (the arrow X1 direction side). Thereby, the rotation of the main shaft 47 caused by the inertial force of the main shaft 47 can be suppressed in association with the disconnection of the drive force transmitted to the main shaft 47 from the crankshaft 33 in the clutch mechanism part 37.

In the first embodiment, as described above, the flange part 54d of the pushrod 54 is configured to annularly press the end face 47c of the main shaft 47. Thereby, the end face 47c of the main shaft 47 can be easily pressed in a stable condition.

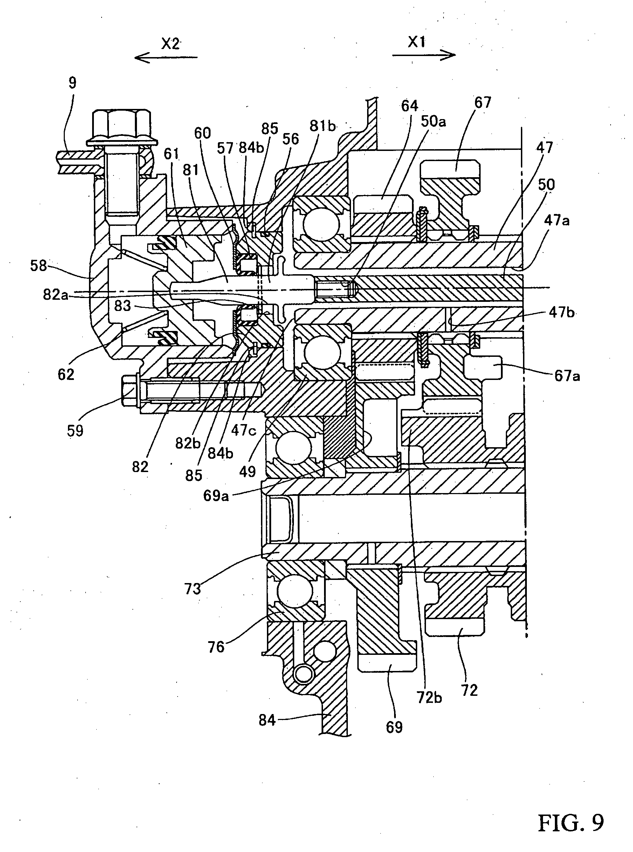

Figures9 to 13 are diagrams for describing the structure of a transmission mechanism according to a second embodiment of the present invention, and the inner structure of the transmission mechanism in detail. Hereinafter, with reference to Figures 9 to 13, the structure of the transmission according to the second embodiment of the present invention will be described in detail. This second embodiment describes an example in which the rotation of the pushrod 81 in the rotation direction of the main shaft 47 is regulated unlike the first embodiment.

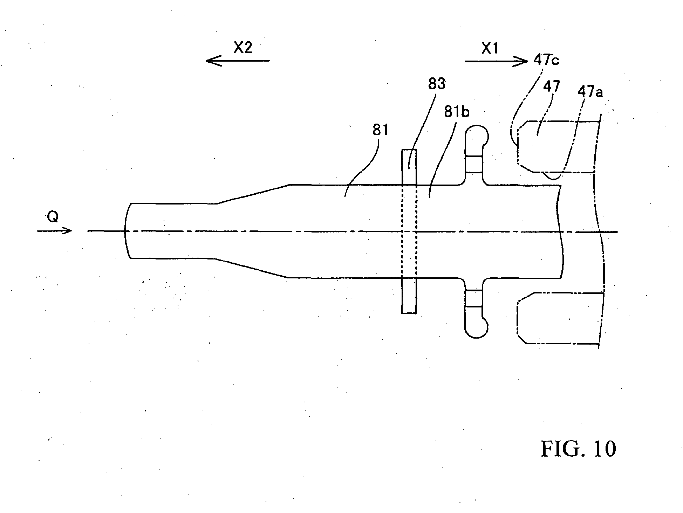

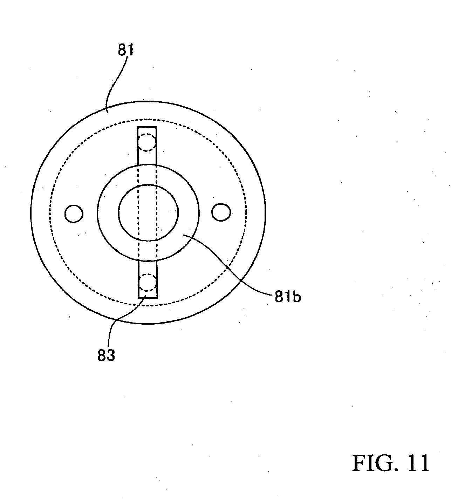

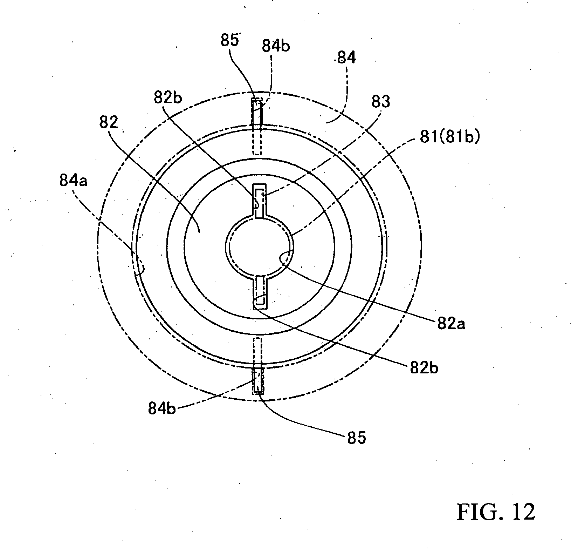

In this second embodiment, as shown in Figure 9, a body part 81b of the pushrod 81 is inserted into an opening part 82a of a rod holder 82. The pushrod 81 is inserted into the opening part 82a with the rotation of the pushrod 81 relative to the rod holder 82 being regulated. Specifically, as shown in Figs. 10 and 11, an iron pin 83 is pressed fit into the body part 81b of the pushrod 81. This pin 83 is disposed to penetrate the center of the body part 81b of the pushrod 81 in the axial direction. The pin 83 is one example of a "locking member" and "first pin" for an embodiment of the present invention. As shown in Figs. 9 and 12, a pair of groove parts 82b with which both ends of the pin 83 can be respectively engaged are formed in the inner peripheral surface of the opening part 82a of the rod holder 82. The pin 83 pressed fit into the pushrod 81 is engaged with the groove part 82b of the rod holder 82. That is, the pin 83 is engaged with the groove part 82b, and thereby the pin 83 has a function for regulating the rotation of the pushrod 81 relative to the rod holder 82. The groove part 82b is one example of a "first groove part" for an embodiment of the present invention.

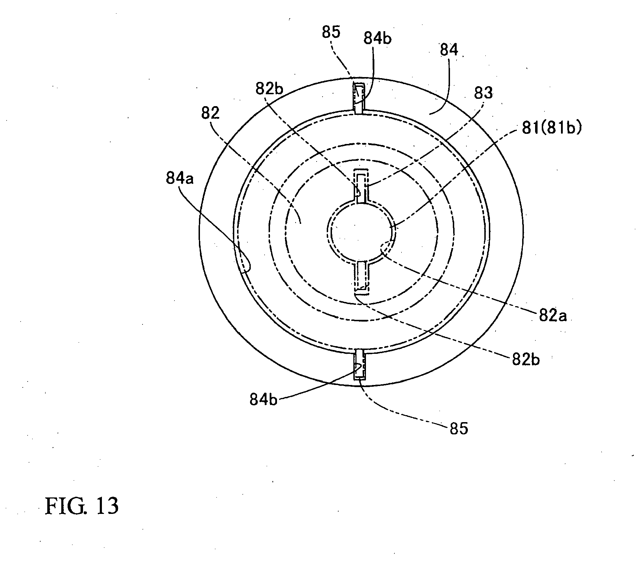

In the second embodiment, the rod holder 82 is inserted into a holder attaching hole 84a of a crank case part 84. The rod holder 82 is inserted into the holder attaching hole 84a with the rotation of the rod holder 82 relative to the crank case part 84 being regulated. Specifically, as shown in Figs. 9 and 12, two iron pins 85 are pressed fit into the outer peripheral surface of the rod holder 82. As shown in Figure 13, the two pins 85 are respectively pressed fit substantially and vertically into the outer peripheral surface of the rod holder 82 at the interval of 180 degrees. The pin 85 is an example of a "locking member" and "second pin" for an embodiment of the present invention. A groove part 84b with which two iron pins 85 can be respectively engaged is formed in the inner peripheral surface of the holder attaching hole 84a of the crank case part 84. The pin 85 pressed fit into the rod holder 82 is engaged with the groove part 84b of the crank case part 84. That is, the pin 85 is engaged with groove part 84b to exhibit a function for regulating the rotation of the rod holder 82 relative to the crank case part 84. The groove part 84b is one example of a "second groove part" for an embodiment of the present invention.

Thus, in the second embodiment, the rotation of the pushrod 81 along with main shaft 47 can be regulated by the pins 83 and 85 when the pushrod 81 presses the main shaft 47. That is, the rotation of the pushrod 81 relative to the rod holder 82 is regulated, and the rotation of the pushrod 81 along with main shaft 47 can be regulated by regulating the rotation of the rod holder 82 relative to the crank case part 84 when the pushrod 81 presses the main shaft 47.

Since the other structures of this second embodiment are the same as those of the first embodiment, the description thereof is omitted.

Since the operation of the second embodiment is the same as that of the first embodiment, the description thereof is omitted.

In the second embodiment, as described above, the pushrod 81 is configured to be able to move in the axial direction of the main shaft 47 (the arrow X1 direction and the arrow X2 direction) with the rotation of the pushrod 81 in the rotation direction of the main shaft 47 being regulated. Thereby, when the main shaft 47 rotates, the rotation of the pushrod 81 along with main shaft 47 can be regulated even when the pushrod 81 presses the end face 47c of the main shaft 47.

In the second embodiment, as described above, the rotation of the pushrod 81 relative to the rod holder 82 is regulated, and the rotation of the rod holder 82 relative to the crank case part 84 is regulated. Thereby, since the rotation of the pushrod 81 relative to the crank case part 84 can be easily regulated, the rotation of the pushrod 81 along with main shaft 47 can be easily regulated.

In the second embodiment, as described above, the pins 83 and 85 regulating the rotation of the pushrod 81 along with main shaft 47 when the pushrod 81 presses the main shaft 47 are provided, and thereby the rotation of the pushrod 81 along with main shaft 47 can be suppressed by the pins 83 and 85.

In the second embodiment, as described above, the groove part 82b with which the pin 83 can be engaged is formed in the rod holder 82, and the groove part 84b with which the pin 85 can be engaged is formed in the crank case part 84. Thereby, since the pins 83 and 85 are engaged in the stable condition by the groove parts 82b and 84b, the rotations of the pushrod 81 and rod holder 82 in the rotation direction of the main shaft 47 can be suppressed in the stable condition.

The other effects of the second embodiment are the same as those of the first embodiment.

The embodiments disclosed this time should be considered illustrative in all respects, rather than restrictive. The scope of the present invention is shown not by the above description of the embodiment but by Claims, and furthermore includes all modifications in the meaning and range equivalent to Claims.

For example, in the above embodiments, the motorcycle is shown as one example of the vehicle. However, the present invention is not limited thereto, and the present invention is applicable to the other vehicles such as an automobile, a tricycle and ATV (All Terrain Vehicle).

The above embodiments show the example in which the pushrod and the rod member are separately formed of the materials having different hardness. However, the present invention is not limited thereto, and the pushrod and the rod member may be integrally formed with one another using a material having high hardness.

The above embodiments show the example in which the convex part of the downstream side fourth gear is engaged with the concave part of the downstream side first gear in starting the motorcycle, thereby suppressing the idling of the downstream side first gear to the drive shaft. However, the present invention is not limited thereto. The idling of the downstream side first gear to the drive shaft may be suppressed by the gear other than the downstream side fourth gear.

The above embodiments show the example in which the downstream side first gear idles to the drive shaft and the upstream side first gear rotates along with the main shaft. However, the present invention is not limited thereto. The downstream side first gear may be configured to rotate along with the drive shaft and the upstream side first gear may be configured to idle to the main shaft.

The above embodiments show the example in which the pushrod is made of iron. However, the present invention is not limited thereto. The pushrod may be made of a material other than iron such as ceramics as long as the material has higher hardness than that of the rod member.

The above embodiments show the example in which two pins are pressed fit into the rod holder at the interval of 180 degrees and two groove parts with which two pins can be engaged are formed in the holder attaching hole of the crank case part. However, the present invention is not limited thereto. Three pins may be pressed fit into the rod holder at the interval of 120 degrees, and three groove parts capable of being engaged with three pins may be formed in the holder attaching hole of the crank case part. Also, four pins may be pressed fit into the rod holder at the interval of 90 degrees, and four groove parts capable of being engaged with four pins may be formed in the holder attaching hole of the crank case part.

### Description of the Reference Numerals

1: motorcycle (vehicle)
7: clutch lever
23, 84: crank case part
33:crankshaft
37: clutch mechanism part
47: main shaft
47a: through-hole (hole part)
47c: one end face
50: rod member (rod part, second rod part)
54, 81: pushrod (rod part, first rod part)
54d: flange part (pressing part)
54e: convex part
54f: oil inflow hole part
55, 82: rod holder
63: upstream side first gear (first gear)
68: downstream side first gear (second gear)
73: drive shaft
77: transmission (transmission mechanism)
82b: groove part (first groove part)
83: pin (locking member, first pin)
84b: groove part (second groove part)
85: pin (locking member, second pin)
A: first gripping amount
B: second gripping amount

## Claims

1. A transmission mechanism (77), comprising:
a crankshaft (33);
a main shaft (47) to which drive force of the crankshaft (33) is transmitted to be rotated;
a clutch mechanism part (37) for disconnecting and connecting the drive force transmitted to the main shaft (47) from the crankshaft (33); and
a rod part (54, 81) connected to the clutch mechanism part (37), the rod part (54, 81) being movable in an axial direction to actuate the clutch mechanism part (37) so as to disconnect and connect the drive force transmitted to the main shaft (47) from the crankshaft (33),
wherein the rod part (54, 81) includes a pressing part (54d),
**characterized in that**
the pressing part (54d) of the rod part (54, 81) is configured to press one end face (47c) of the main shaft (47) when the clutch mechanism part (37) is actuated so as to disconnect the drive force transmitted to the main shaft (47) from the crankshaft (33).

2. The transmission mechanism (77) according to claim 1, further comprising a clutch lever (7) gripped by a user to be configured to be operable so as to move the rod part (54, 81) in the axial direction,
wherein the pressing part (54d) is configured to press the main shaft (47) when the clutch lever (7) is gripped in a first gripping amount (A).

3. The transmission mechanism (77) according to claim 2, wherein the pressing part (54d) is configured so as not to press the main shaft (47) when the clutch lever (7) is gripped in a second gripping (B) amount less than the first gripping amount (A).

4. The transmission mechanism (77) according to claim 2 or claim 3, further comprising a drive shaft (73) for transmitting the rotation of the main shaft (47),
wherein the main shaft (47) includes a first gear (63) rotating along with the main shaft (47),
the drive shaft (73) including a second gear (68) meshing with the first gear (63) of the main shaft (47), the second gear (68) being configured to idle to the drive shaft (73), and
the pressing part (54d) of the rod part (54, 81) being configured to reduce the rotation number of the main shaft (47) to reduce the rotation number of the first gear (63).

5. The transmission mechanism (77) according to any one of the preceding claims, wherein the pressing part (54d) of the rod part (54, 81) is provided integrally with the rod part (54, 81), the pressing part (54d) including a flange part projecting to a direction crossing in the axial direction from the rod part (54, 81).

6. The transmission mechanism (77) according to claim 5, wherein a convex part (54e) projecting to the one end face side of the main shaft (47) and having a section of a semicircular shape is formed on a portion of the flange part constituting the pressing part (54d), the portion pressing the main shaft (47).

7. The transmission mechanism (77) according to claim 5 or claim 6, wherein the flange part is configured to press the one end face (47c) of the main shaft (47).

8. The transmission mechanism (77) according to any one of claims 5 to 7,
wherein the main shaft (47) includes a hole part (47a) substantially provided along a center in the axial direction; and
the flange part constituting the pressing part (54d) of the rod part (54, 81) has an oil inflow hole part (54f) for circulating oil in the hole part (47a) of the main shaft (47) when one side of the hole part (47a) of the main shaft (47) is covered by the flange part by pressing the one end face (47c) of the main shaft (47).

9. The transmission mechanism (77) according to any one of claims 1 to 4, wherein the rod part includes a first rod part (54, 81) on which the pressing part (54d) is provided and a second rod part (50) on which the pressing part (54d) is not provided, and the first rod part (54, 81) is made of a material having hardness higher than that of the second rod part (50).

10. The transmission mechanism (77) according to any one of claims 1 to 4, wherein:
the pressing part (54d) of the rod part (54, 81) is provided integrally with the rod part (54, 81), the pressing part (54d) including a flange part projecting to a direction crossing in the axial direction from the rod part (54, 81);
the rod part (54, 81) is configured to be movable to the clutch mechanism part side; and
the flange part of the pressing part (54d) is configured to press the one end face (47c) of the main shaft (47) in association with movement of the rod part (54, 81) to the clutch mechanism part side.

11. The transmission mechanism (77) according to claim 10, wherein the flange part constituting the pressing part (54d) of the rod part (54, 81) is configured to annularly press the one end face (47c) of the main shaft (47).

12. The transmission mechanism (77) according to any one of the preceding claims, wherein the rod part (54, 81) is configured to be movable in the axial direction of the main shaft (47) with rotation of the rod part (54, 81) in the rotation direction of the main shaft (47) being regulated.

13. The transmission mechanism (77) according to claim 12, further comprising:
a crank case part (23, 84) in which the main shaft (47) is disposed; and
a rod holder (55, 82) disposed in the crank case part (23, 84), the rod holder (55, 82) into which the rod part (54, 81) can be inserted,
wherein rotation of the rod part (54, 81) relative to the rod holder (55, 82) is regulated, and rotation of the rod holder (55, 82) relative to the crank case part (23, 84) is regulated.

14. The transmission mechanism (77) according to claim 13, further comprising a locking member (83, 85) regulating the rotation of the rod part (81) along with the main shaft (47) when the rod part (81) presses the main shaft (47).

15. The transmission mechanism (77) according to claim 14, wherein the locking member includes a first pin (83) regulating the rotation of the rod part (81) relative to the rod holder (82) and a second pin (85) regulating the rotation of the rod holder (82) relative to the crank case part (84), a first groove part (82b) with which the first pin (83) can be engaged being formed in the rod holder (82), and a second groove part (84b) with which the second pin (85) can be engaged being formed in the crank case part (84).

16. A vehicle (1) provided with the transmission mechanism (77) according to any one of claims 1 to 15.

## Patentansprüche

1. Ein Übertragungsmechanismus (77), der folgende Merkmale aufweist:
eine Kurbelwelle (33);
eine Hauptwelle (47), auf die eine Antriebskraft der Kurbelwelle (33) übertragen wird, um dieselbe zu drehen;
ein Kupplungsmechanismusbauteil (37) zum Unterbrechen und Verbinden der Antriebskraft, die von der Kurbelwelle (33) auf die Hauptwelle (47) übertragen wird; und
ein Stangenbauteil (54, 81), das mit dem Kupplungsmechanismusbauteil (37) verbunden ist, wobei das Stangenbauteil (54, 81) in einer Axialrichtung bewegbar ist, um das Kupplungsmechanismusbauteil (37) zu betätigen, um die Antriebskraft, die von der Kurbelwelle (33) auf die Hauptwelle (47) übertragen wird, zu unterbrechen und zu verbinden,
wobei das Stangenbauteil (54, 81) ein Druckbauteil (54d) umfasst,
**dadurch gekennzeichnet, dass**
das Druckbauteil (54d) des Stangenbauteils (54, 81) ausgebildet ist, eine Endfläche (47c) der Hauptwelle (47) zu drücken, wenn das Kupplungsmechanismusbauteil (37) betätigt wird, um die Antriebskraft, die von der Kurbelwelle (33) auf die Hauptwelle (47) übertragen wird, zu unterbrechen.

2. Der Übertragungsmechanismus (77) gemäß Anspruch 1, der ferner einen von einem Benutzer gegriffenen Kupplungshebel (7) umfasst, der auszubilden ist, um bedient werden zu können, um das Stangenbauteil (54, 81) in der Axialrichtung zu bewegen,
wobei das Druckbauteil (54d) ausgebildet ist, die Hauptwelle (47) zu drücken, wenn der Kupplungshebel (7) in einem ersten Greifbetrag (A) gegriffen wird.

3. Der Übertragungsmechanismus (77) gemäß Anspruch 2, bei dem das Druckbauteil (54d) ausgebildet ist, die Hauptwelle (47) nicht zu drücken, wenn der Kupplungshebel (7) in einem zweiten Greifbetrag (B) gegriffen wird, der geringer als der erste Greifbetrag (A) ist.

4. Der Übertragungsmechanismus (77) gemäß Anspruch 2 oder Anspruch 3, der ferner eine Antriebswelle (73) zum Übertragen der Drehung der Hauptwelle (47) aufweist,
wobei die Hauptwelle (47) ein erstes Getrieberad (63) umfasst, das sich zusammen mit der Hauptwelle (47) dreht,
die Antriebswelle (73) ein zweites Getrieberad (68) umfasst, das mit dem ersten Getrieberad (63) der Hauptwelle (47) ineinandergreift, wobei das zweite Getrieberad (68) ausgebildet ist, zu der Antriebswelle (73) leerzulaufen, und
das Druckbauteil (54d) des Stangenbauteils (54, 81) ausgebildet ist, die Drehzahl der Hauptwelle (47) zu reduzieren, um die Drehzahl des ersten Getrieberads (63) zu reduzieren.

5. Der Übertragungsmechanismus (77) gemäß einem der vorhergehenden Ansprüche, bei dem das Druckbauteil (54d) des Stangenbauteils (54, 81) integriert mit dem Stangenbauteil (54, 81) vorgesehen ist, wobei das Druckbauteil (54d) ein Flanschbauteil umfasst, das in eine Richtung vorsteht, die in der Axialrichtung von dem Stangenbauteil (54, 81) kreuzt.

6. Der Übertragungsmechanismus (77) gemäß Anspruch 5, bei dem ein konvexes Bauteil (54e), das zu der einen Endflächenseite der Hauptwelle (47) vorsteht und einen Ausschnitt in Halbkreisform aufweist, auf einem Abschnitt des Flanschbauteils gebildet ist, das das Druckbauteil (54d) bildet, wobei der Abschnitt die Hauptwelle (47) drückt.

7. Der Übertragungsmechanismus (77) gemäß Anspruch 5 oder Anspruch 6, bei dem das Flanschbauteil ausgebildet ist, die eine Endfläche (47c) der Hauptwelle (47) zu drücken.

8. Der Übertragungsmechanismus (77) gemäß einem der Ansprüche 5 bis 7, bei dem die Hauptwelle (47) ein Lochbauteil (47a) umfasst, das im Wesentlichen entlang einer Mitte in der Axialrichtung vorgesehen ist; und
das Flanschbauteil, das das Druckbauteil (54d) des Stangenbauteils (54, 81) bildet, ein Ölzulauf-Lochbauteil (54f) zum Zirkulieren von Öl in dem Lochbauteil (47a) der Hauptwelle (47) aufweist, wenn eine Seite des Lochbauteils (47a) der Hauptwelle (47) durch das Flanschbauteil bedeckt ist durch Drücken der einen Endfläche (47c) der Hauptwelle (47).

9. Der Übertragungsmechanismus (77) gemäß einem der Ansprüche 1 bis 4, bei dem das Stangenbauteil ein erstes Stangenbauteil (54, 81) umfasst, auf dem das Druckbauteil (54d) vorgesehen ist, und ein zweites Stangenbauteil (50), auf dem das Druckbauteil (54d) nicht vorgesehen ist, und das erste Stangenbauteil (54, 81) aus einem Material hergestellt ist, das eine höhere Härte aufweist als das des zweiten Stangenbauteils (50).

10. Der Übertragungsmechanismus (77) gemäß einem der Ansprüche 1 bis 4, bei dem:
das Druckbauteil (54d) des Stangenbauteils (54, 81) integriert mit dem Stangenbauteil (54, 81) vorgesehen ist, wobei das Druckbauteil (54d) ein Flanschbauteil umfasst, das in eine Richtung vorsteht, die in der Axialrichtung von dem Stangenbauteil (54, 81) kreuzt,
das Stangenbauteil (54, 81) ausgebildet ist, zu der Seite des Kupplungsmechanismusbauteils bewegbar zu sein; und
das Flanschbauteil des Druckbauteils (54d) ausgebildet ist, die eine Endfläche (47c) der Hauptwelle (47) in Verbindung mit einer Bewegung des Stangenbauteils (54, 81) zu der Seite des Kupplungsmechanismusbauteils zu drücken.

11. Der Übertragungsmechanismus (77) gemäß Anspruch 10, bei dem das Flanschbauteil, das das Druckbauteil (54d) des Stangenbauteils (54, 81) bildet, ausgebildet ist, die eine Endfläche (47c) der Hauptwelle (47) ringförmig zu drücken.

12. Der Übertragungsmechanismus (77) gemäß einem der vorhergehenden Ansprüche, bei dem das Stangenbauteil (54, 81) ausgebildet ist, in der Axialrichtung der Hauptwelle (47) bewegbar zu sein, wobei eine Drehung des Stangenbauteils (54, 81) in der Drehrichtung der Hauptwelle (47) geregelt wird.

13. Der Übertragungsmechanismus (77) gemäß Anspruch 12, der ferner folgende Merkmale aufweist:
ein Kurbelgehäusebauteil (23, 84), in dem die Hauptwelle (47) angeordnet ist; und
einen Stangenhalter (55, 82), der in dem Kurbelgehäusebauteil (23, 84) angeordnet ist, der Stangenhalter (55, 82), in den das Stangenbauteil (54, 81) eingeführt werden kann,
wobei eine Drehung des Stangenbauteils (54, 81) relativ zu dem Stangenhalter (55, 82) geregelt ist und eine Drehung des Stangenhalters (55, 82) relativ zu dem Kurbelgehäusebauteil (23, 84) geregelt ist.

14. Der Übertragungsmechanismus (77) gemäß Anspruch 13, der ferner ein Verriegelungsbauglied (83, 85) aufweist, das die Drehung des Stangenbauteils (81) zusammen mit der Hauptwelle (47) regelt, wenn das Stangenbauteil (81) die Hauptwelle (47) drückt.

15. Der Übertragungsmechanismus (77) gemäß Anspruch 14, bei dem das Verriegelungsbauglied einen ersten Stift (83) umfasst, der die Drehung des Stangenbauteils (81) relativ zu dem Stangenhalter (82) regelt, und einen zweiten Stift (85), der die Drehung des Stangenhalters (82) relativ zu dem Kurbelgehäusebauteil (84) regelt, wobei ein erstes Rillenbauteil (82b), mit dem der erste Stift (83) in Eingriff genommen werden kann, in dem Stangenhalter (82) gebildet ist, und ein zweites Rillenbauteil (84b), mit dem der zweite Stift (85) in Eingriff genommen werden kann, in dem Kurbelgehäuseteil (84) gebildet ist.

16. Ein Fahrzeug (1), das mit dem Übertragungsmechanismus (77) gemäß einem der Ansprüche 1 bis 15 versehen ist.

## Revendications

1. Mécanisme de transmission (77), comprenant:
un vilebrequin (33);
un arbre principal (47) auquel est transmise la force d'entraînement du vilebrequin (33) pour sa rotation;
une partie de mécanisme d'embrayage (37) destinée à déconnecter et connecter la force d'entraînement transmise à l'arbre principal (47) par le vilebrequin (33); et
une partie de tige (54, 81) connectée à la partie de mécanisme d'embrayage (37), la partie de tige (54, 81) étant mobile dans une direction axiale pour actionner la partie de mécanisme d'embrayage (37) de manière à déconnecter et connecter la force d'entraînement transmise à l'arbre principal (47) par le vilebrequin (33),
dans lequel la partie de tige (54, 81) comporte une partie de pression (54d),
**caractérisé par le fait que**
la partie de pression (54d) de la partie de tige (54, 81) est configurée pour appuyer sur une face d'extrémité (47c) de l'arbre principal (47) lorsque la partie de mécanisme d'embrayage (37) est actionnée de manière à déconnecter la force d'entraînement transmise à l'arbre principal (47) par le vilebrequin (33).

2. Mécanisme de transmission (77) selon la revendication 1, comprenant par ailleurs un levier d'embrayage (7) saisi par un utilisateur, destiné à être configuré pour pouvoir être actionné de manière à déplacer la partie de tige (54, 81) dans la direction axiale,
dans lequel la partie de pression (54d) est configurée pour ne pas appuyer sur l'arbre principal (47) lorsque le levier d'embrayage (7) est saisi selon une première quantité de saisie (A).

3. Mécanisme de transmission (77) selon la revendication 2, dans lequel la partie de pression (54d) est configurée de manière à ne pas appuyer sur l'arbre principal (47) lorsque le levier d'embrayage (7) est saisi selon une deuxième quantité de saisie (B) inférieure à la première quantité de saisie (A).

4. Mécanisme de transmission (77) selon la revendication 2 ou la revendication 3, comprenant par ailleurs un arbre d'entraînement (73) destiné à transmettre la rotation de l'arbre principal (47),
dans lequel l'arbre principal (47) comporte un premier engrenage (63) tournant ensemble avec l'arbre principal (47),
l'arbre d'entraînement (73) comportant un deuxième engrenage (68) engrenant avec le premier engrenage (63) de l'arbre principal (47), le deuxième engrenage (68) étant configuré pour tourner au ralenti sur l'arbre d'entraînement (73), et
la partie de pression (54d) de la partie de tige (54, 81) étant configurée pour réduire le nombre de rotations de l'arbre principal (47) pour réduire le nombre de rotations du premier engrenage (63).

5. Mécanisme de transmission (77) selon l'une quelconque des revendications précédentes, dans lequel la partie de pression (54d) de la partie de tige (54, 81) est prévue de manière solidaire avec la partie de tige (54, 81), la partie de pression (54d) comportant une partie de bride faisant saillie dans une direction venant en intersection avec la direction axiale de la partie de tige (54, 81).

6. Mécanisme de transmission (77) selon la revendication 5, dans lequel une partie convexe (54e) faisant saillie vers l'un côté de la face d'extrémité de l'arbre principal (47) et présentant une section de forme semi-circulaire est formée sur une portion de la partie de bride constituant la partie de pression (54d), la portion appuyant l'arbre principal (47).

7. Mécanisme de transmission (77) selon la revendication 5 ou la revendication 6, dans lequel la partie de bride est configurée pour appuyer sur l'une face d'extrémité (47c) de l'arbre principal (47).

8. Mécanisme de transmission (77) selon l'une quelconque des revendications 5 à 7, dans lequel l'arbre principal (47) comporte une partie de trou (47a) prévue substantiellement le long d'un centre dans la direction axiale; et
la partie de bride constituant la partie de pression (54d) de la partie de tige (54, 81) présente une partie de trou d'entrée d'huile (54f) pour faire circuler de l'huile dans la partie de trou (47a) de l'arbre principal (47) lorsqu'un côté de la partie de trou (47a) de l'arbre principal (47) est couverte par la partie de bride en appuyant sur l'une face d'extrémité (47c) de l'arbre principal (47).

9. Mécanisme de transmission (77) selon l'une quelconque des revendications 1 à 4, dans lequel la partie de tige comporte une première partie de tige (54, 81) sur laquelle est prévue la partie de pression (54d) et une deuxième partie de tige (50) sur laquelle n'est pas prévue la partie de pression (54d), et la première partie de tige (54, 81) est réalisée en un matériau présentant une dureté supérieure à celle de la deuxième partie de tige (50).

10. Mécanisme de transmission (77) selon l'une quelconque des revendications 1 à 4, dans lequel:
la partie de pression (54d) de la partie de tige (54, 81) est prévue solidaire de la partie de tige (54, 81), la partie de pression (54d) comportant une partie de bride faisant saillie dans une direction venant en intersection avec la direction axiale de la partie de tige (54, 81);
la partie de tige (54, 81) est configurée de manière à pouvoir se déplacer vers le côté de la partie de mécanisme d'embrayage; et
la partie de bride de la partie de pression (54d) est configurée pour appuyer sur l'une face d'extrémité (47c) de l'arbre principal (47) en association avec le déplacement de la partie de tige (54, 81) vers le côté de la partie de mécanisme d'embrayage.

11. Mécanisme de transmission (77) selon la revendication 10, dans lequel la partie de bride constituant la partie de pression (54d) de la partie de tige (54, 81) est configurée pour appuyer de manière annulaire sur l'une face d'extrémité (47c) de l'arbre principal (47).

12. Mécanisme de transmission (77) selon l'une quelconque des revendications précédentes, dans lequel la partie de tige (54, 81) est configurée de manière à pouvoir se déplacer dans la direction axiale de l'arbre principal (47), une rotation de la partie de tige (54, 81) dans la direction de rotation de l'arbre principal (47) étant régulée.

13. Mécanisme de transmission (77) selon la revendication 12, comprenant par ailleurs:
une partie de carter de vilebrequin (23, 84) dans laquelle est disposé l'arbre principal (47); et
un porte-tige (55, 82) disposé dans la partie de carter de vilebrequin (23, 84), porte-tige (55, 82) dans lequel peut être introduite la partie de tige (54, 81),
dans lequel une rotation de la partie de tige (54, 81) par rapport au porte-tige (55, 82) est régulée, et une rotation du porte-tige (55, 82) par rapport à la partie de carter de vilebrequin (23, 84) est régulée.

14. Mécanisme de transmission (77) selon la revendication 13, comprenant par ailleurs un élément de verrouillage (83, 85) régulant la rotation de la partie de tige (81) ensemble avec l'arbre principal (47) lorsque la partie de tige (81) appuie sur l'arbre principal (47).

15. Mécanisme de transmission (77) selon la revendication 14, dans lequel l'élément de verrouillage comporte une première goupille (83) régulant la rotation de la partie de tige (81) par rapport au porte-tige (82) et une deuxième goupille (85) régulant la rotation du porte-tige (82) par rapport à la partie de carter de vilebrequin (84), une première partie de rainure (82b) avec laquelle peut venir en prise la première goupille (83) étant formée dans le porte-tige (82), et une deuxième partie de rainure (84b) avec laquelle peut venir en prise la deuxième goupille (85) étant formée dans la partie de carter de vilebrequin (84).

16. Véhicule (1) pourvu du mécanisme de transmission (77) selon l'une quelconque des revendications 1 à 15.
